# EUROPEAN PATENT APPLICATION

(11) **EP 4 715 957 A1**
(43) Date of publication of application: **25.03.2026**
(21) Application number: 23937467.1
(22) Date of filing: 16.05.2023
(51) Int. Cl.: H01M 10/48, H02J 7/04

(54) **BATTERY CONTROL SYSTEM AND BATTERY CONTROL METHOD**

(71) Applicant: Nissan Motor Co., Ltd., Yokohama-shi, Kanagawa 221-0023 (JP); Renault s.a.s, 92100 Boulogne Billancourt (FR)
(72) Inventor: IKEDA, Nobuhisa, Atsugi-shi, Kanagawa 243-0123 (JP)
(74) Representative: Grünecker Patent- und Rechtsanwälte PartG mbB
(86) International application number: PCT/JP2023/018238
(87) International publication number: WO 2024/236725

(57) **Abstract**

A battery control system (1) controls a solid-state battery including a battery cell (21) having a solid electrolyte and a negative electrode containing lithium. The battery control system includes: a measurement unit that measures a surface pressure distribution from an actual measured value or an estimated value of a surface pressure distribution on a main surface of the battery cell (21); and a control unit that controls a charge/discharge current of the solid-state battery, the charge/discharge current being at least one of a charge current and a discharge current. The control unit determines the charge/discharge current according to an upper-limit surface pressure difference and a lower-limit surface pressure difference, the upper-limit surface pressure difference being a difference between a measured value of the surface pressure distribution measured by the measurement unit and an upper limit surface pressure of the battery cell (21), the lower-limit surface pressure difference being a difference between the measured value of the surface pressure distribution measured by the measurement unit and a lower limit surface pressure of the battery cell (21).

## Description

### Technical Field

The present invention relates to a battery control system and a battery control method.

### Background Art

There has been known a battery system that determines whether or not high-rate degradation due to charging or discharging can occur on a lithium secondary battery, based on the center portion surface pressure and the end portion surface pressure of an electrode body contained in the lithium secondary battery (see Patent Document 1). The battery system disclosed in Patent Document 1 limits an input current or an output current to the secondary battery when it is determined that an increase in resistance occurs due to charging and/or discharging of the secondary battery, based on the first pressure at the center portion of the electrode body and the second pressure at the end portion of the electrode body.

### Prior Art Document

### Patent Document

Patent Document 1: JP-A-2019-61749

### Summary of Invention

### Problems to be Solved by Invention

In a solid-state battery using a negative electrode containing lithium, it is required to control a charge/discharge current of the solid-state battery so that the surface pressure of the battery cell contained in the solid-state battery does not fall below a lower limit value. However, the above-described system of the prior art does not limit the current to ensure that the pressure of the electrode body does not fall below the lower limit value. Therefore, there is a problem that it cannot be applied to a system that controls the charge/discharge current of a solid-state battery.

The problem to be solved by the present invention is to provide a battery control system and a battery control method that can control the charge/discharge current of a solid-state battery to ensure that the surface pressure of a battery cell contained in the solid-state battery does not fall below the lower limit value.

### Means for Solving Problems

The present invention solves the above problem by determining at least one of a charge current and a discharge current of a solid-state battery according to an upper-limit surface pressure difference and a lower-limit surface pressure difference. The upper-limit surface pressure difference is a difference between a measured value of a surface pressure distribution on a main surface of a battery cell and an upper limit surface pressure of the battery cell. The lower-limit surface pressure difference is a difference between the measured value of the surface pressure distribution and a lower limit surface pressure of the battery cell.

### Effects of Invention

With the present invention, the charge/discharge current of a solid-state battery can be controlled to ensure that the surface pressure of the battery cell contained in the solid-state battery does not fall below the lower limit value.

### Brief Description of Drawings

FIG. 1 is a block diagram illustrating a battery control system according to an embodiment of the present invention.
FIG. 2 is a plan view of a battery cell.
FIG. 3 illustrates a graph representing the characteristic of a creep amount of lithium and the characteristic of cell resistance relative to a surface pressure of the battery cell.
FIG. 4 illustrates a graph representing an SOC characteristic, a surface pressure characteristic, and a charge current characteristic of the battery cell.
FIG. 5 illustrates a graph representing a temperature distribution characteristic, the charge current characteristic, the characteristic of thickness difference/amount of lithium migration, and the surface pressure characteristic of the battery cell.
FIG. 6 is a flowchart illustrating the procedure of a battery control method according to the embodiment of the present invention.
FIG. 7 illustrates a graph representing the characteristics of upper and lower limit surface pressures relative to the SOC of the battery cell and the characteristics of upper and lower limit surface pressures relative to a cell temperature.
FIG. 8 is a flowchart illustrating the procedure of a battery control method according to a modification of the embodiment of the present invention.
FIG. 9 is a flowchart illustrating the procedure of a battery control method according to a modification of the embodiment of the present invention.

### Mode(s) for Carrying out the Invention

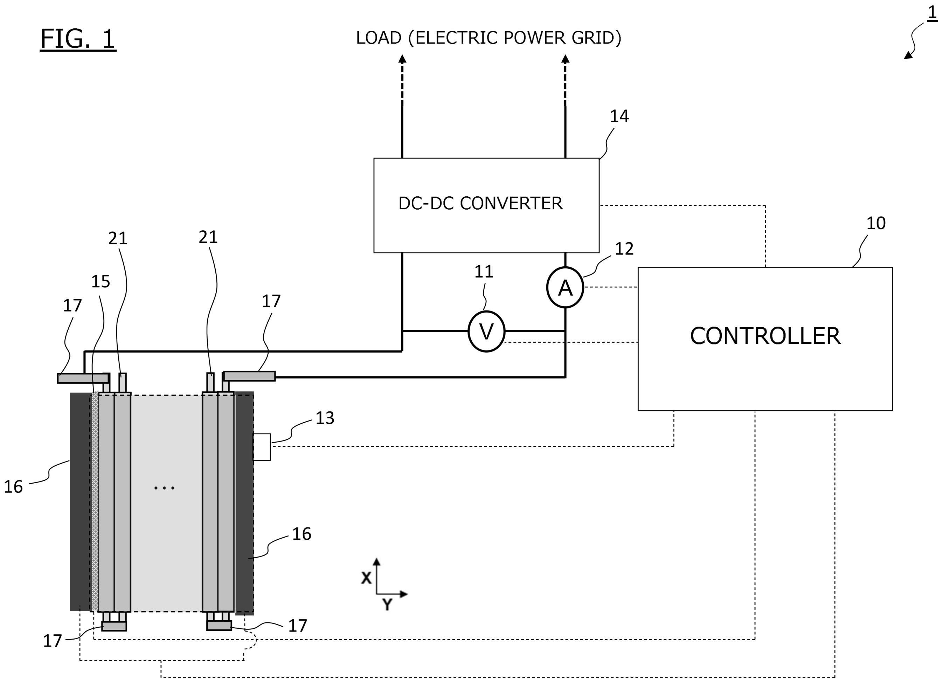

As illustrated in FIG. 1, a battery control system 1 includes a controller 10, a voltage sensor 11, a current sensor 12, a temperature sensor 13, a DC-DC converter 14, a surface pressure distribution measuring device 15, a pressure application mechanism 16, and busbars 17. The controller 10 in the embodiment corresponds to an exemplary "control unit" in the present invention. The surface pressure distribution measuring device 15 corresponds to an exemplary "measurement unit" in the present invention. The pressure application mechanism 16 corresponds to an exemplary "pressure application unit" in the present invention.

The controller 10 is a battery control unit (BCU). The controller 10 is constituted of a memory, such as ROM or RAM, a processor, such as CPU, and the like. The controller 10 manages the state of a battery module 2 based on a detection voltage detected by the voltage sensor 11, a detection current detected by the current sensor 12, a detection temperature detected by the temperature sensor 13, a measured value measured by the surface pressure distribution measuring device 15, and the like. In addition, the controller 10 controls a charge/discharge current for charging or discharging the battery module 2. The charge/discharge current is at least one of the charge current and the discharge current of the battery module 2.

The voltage sensor 11 is a sensor for detecting a voltage between terminals of the battery module 2. The voltage sensor 11 is connected between wires connected to a positive electrode and a negative electrode of the battery module 2. The current sensor 12 is a sensor for detecting an input/output current of the battery module 2. The current sensor 12 is connected to the wire connected to the positive electrode or the negative electrode of the battery module 2. The temperature sensor 13 is disposed in the battery module 2. The temperature sensor 13 is a sensor for detecting a temperature of the battery module 2.

The DC-DC converter 14 is a power conversion device that converts the voltage input from the battery module 2 into a predetermined voltage and outputs power to a load, such as a motor. The DC-DC converter 14 is also a power conversion device that converts the voltage input from a charging device into a predetermined voltage and outputs power to the battery module 2. The DC-DC converter 14 is controlled by the controller 10. The battery module 2 is connected to an input side of the DC-DC converter 14, and a load is connected to an output side of the DC-DC converter 14. The load is, for example, an electric power grid including a motor inverter and the like. The charging device may be connected to the output side of the DC-DC converter 14.

The surface pressure distribution measuring device 15 measures a surface pressure distribution on a main surface of a battery cell 21 included in the battery module 2. The measured value of the surface pressure distribution measuring device 15 is an actual measured value of the surface pressure distribution. The surface pressure distribution measuring device 15 is disposed along the main surface of the battery cell 21. The surface pressure distribution measuring device 15 may have a pressure sensor and the like. The surface pressure distribution measuring device 15 may measure each of a maximum surface pressure value and a minimum surface pressure value. The maximum surface pressure value is the highest pressure among the pressures on the main surface of the battery cell 21, and the minimum surface pressure value is the lowest pressure among them. The surface pressure distribution measuring device 15 may measure the pressure on the entire surface of the main surface of the battery cell 21, or may measure the pressure at least one measuring point on the main surface of the battery cell 21. The maximum surface pressure value and the minimum surface pressure value of the surface pressure distribution may be calculated from the measured values of the surface pressure distribution measuring device 15 by arithmetic processing of the controller 10. For example, the controller 10, where the surface pressure distribution on the main surface of the battery cell 21 is modeled by a formula, only needs to acquire the measured value at the measuring point from the surface pressure distribution measuring device 15 and calculate the maximum surface pressure value and the minimum surface pressure value of the surface pressure distribution using the formula of the modeled surface pressure distribution.

The pressure application mechanism 16 applies pressure to the battery module 2 by pressing the battery module 2 toward a stacking direction of battery cells 21 contained in the battery module 2. The pressure application mechanism 16 has a plurality of cell pressurization plates. The cell pressurization plates are disposed on a top surface and a bottom surface of the battery module 2 and are also disposed inside the battery module 2. The cell pressurization plates disposed on the top surface and the bottom surface of the battery module 2 are end plates, which sandwich stacked bodies of the battery cells 21 from the stacking direction of the battery cells 21 and apply pressure to the battery cells 21. The cell pressurization plates disposed inside the battery module 2 are members that are installed between a plurality of battery cells 21, which can absorb displacement caused by the charging and discharging of the battery module 2. For example, the cell pressurization plates are composed of an elastic body. The pressure application mechanism 16 has a cell fixing plate that secures the plurality of battery cells 21 to a pack structure. In addition, the pressure application mechanism 16 has a mechanism to change the distance between the cell fixing plate and the pressurization plates. Based on a control command of the controller 10, the pressure application mechanism 16 changes the distance between the cell fixing plate and the pressurization plates to change the pressure applied to the battery cells 21.

The battery module 2 is a solid-state battery, which is electrically connected to the charging device. The charging device connected to the battery cells 21 is, for example, a device that charges the battery module 2 equipped in an electric vehicle and a hybrid vehicle. Charging the on-board battery module 2 is conducted by taking out a charging cable of the charging device, attaching a charging gun at the end of the charging cable to a connector in a vehicle charging port, and then operating a charging start switch. The controller 10 manages the state of charge (SOC) of the battery cells 21 contained in the battery module 2, while controlling each of the DC-DC converter 14 and the charging device so that the state of charge of the battery module 2 reaches a target state of charge.

As described above, the battery module 2 is electrically connected to a load, such as a motor. The load is a device that operates using the power from the battery module 2, and examples include a motor that serves as the driving source of a vehicle, as well as auxiliary equipment, such as an air conditioner and lights. Discharging the battery module 2 is conducted under the control of the controller 10, in response to a system request or an external power request. The system request corresponds to a command from an on-board computer, such as an ECU, while the vehicle is running. As for the external power request, for example, a command from a vehicle exterior device, such as a portable terminal, directs the air conditioner to operate before the vehicle is running by a timer setting so that the interior of the vehicle is at an appropriate temperature when the vehicle starts to run. In this case, the command from the vehicle exterior device corresponds to the external power request.

The battery module 2 equipped in an electric vehicle or a hybrid vehicle may also be used for Vehicle Grid Integration (VGI). The VGI is a technology that connects the electric vehicle or hybrid vehicle equipped with the battery module 2 to a grid and supplies the power accumulated in the battery module 2 to the grid (load) via the electric power grid.

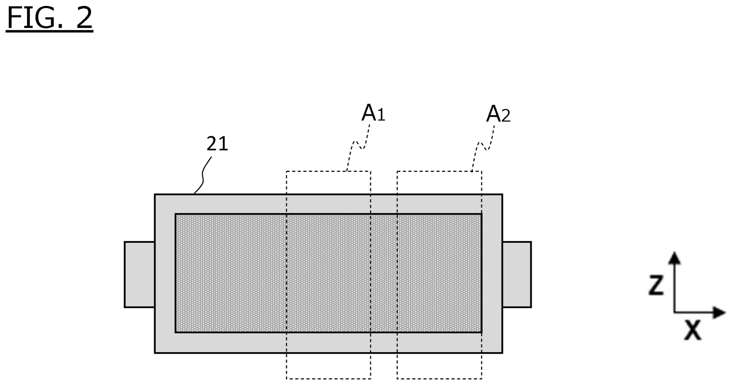

The battery cell 21 contained in the battery module 2 has at least a positive electrode, a solid electrolyte, and a negative electrode. The positive electrode contains at least a positive-electrode active material capable of releasing and occluding alkali metals, such as lithium (Li), sodium (Na), or potassium (K), and contains, but is not specifically limited to, a positive-electrode active material containing sulfur. As the solid electrolyte, for example, sulfide solid electrolyte, oxide solid electrolyte, or the like can be used. The negative electrode only needs to contain lithium, and it contains, for example, lithium metal or a lithium alloy. The battery cell 21 is sealed by an exterior member in a state where tabs are connected to a stacked body having the positive electrode, the solid electrolyte, and the negative electrode. The battery cell 21 is formed in a flat shape. In addition, a plurality of stacked battery cells 21 are interconnected via the busbars 17. FIG. 2 is a plan view of the battery cell 21. The plurality of battery cells 21 are stacked along a y-direction, and a surface along an x-z plane is the main surface of the battery cell 21 and corresponds to a stacked surface. In the battery cell 21 illustrated in FIG. 2, the tabs protrude from both sides. However, the battery cell 21 may have a structure in which only a tab on one side protrudes. In addition, the tabs may protrude from the short sides of the main surface of the battery cell 21 as illustrated in FIG. 2, or may protrude from the long sides.

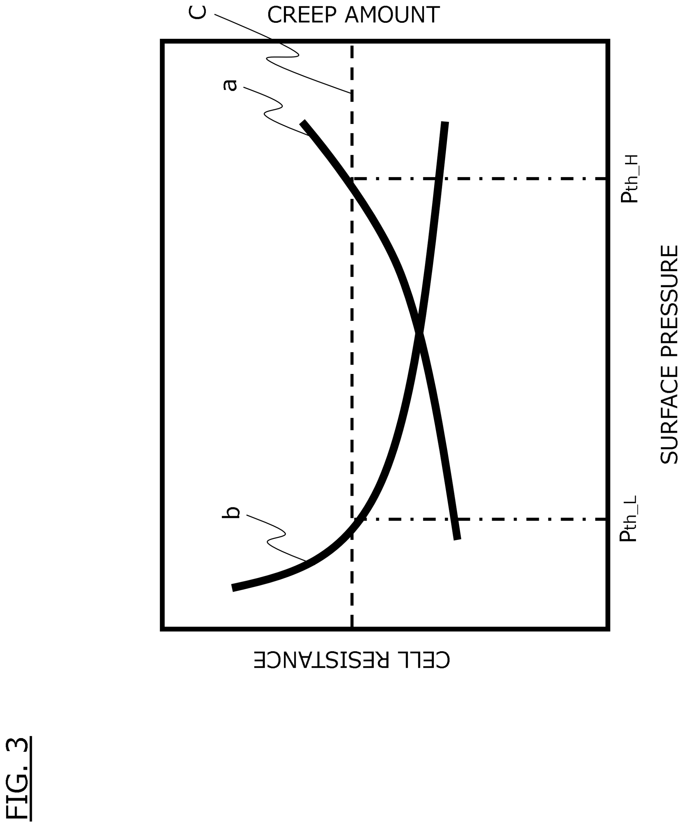

Next, with reference to FIG. 3, the surface pressure of the battery cell 21 is described. FIG. 3 illustrates a graph representing the characteristic of a creep amount of lithium relative to the surface pressure (graph ***a***) and a graph representing the characteristic of cell resistance relative to the surface pressure (graph b), in a state where the battery cell 21 has a constant thickness. As represented by the graph ***a***, the higher the surface pressure, the greater the creep amount. For example, suppose the surface pressure of the battery cell 21 increases, and the creep amount increases excessively during the charging of the battery module 2. In that case, dendrites will form, thereby raising the possibility of a short circuit. Therefore, a reference value (criterion: C) for defining surface pressure limits (upper limit surface pressure: P_{th_H}, lower limit surface pressure: P_{th_L}) is predetermined, and the surface pressure corresponding to an intersection point between the characteristic of surface pressure-creep amount (graph ***a***) and the reference value (C) is preset as the upper limit surface pressure (P_{th_H}). When the surface pressure of the battery cell 21 exceeds the upper limit surface pressure, the possibility of a short circuit increases. That is, the upper limit surface pressure (P_{th_H}) is the upper limit value of the permissible surface pressure for the battery cell 21. The upper limit surface pressure (P_{th_H}) is a threshold that keeps the possibility of a short circuit, which varies depending on the surface pressure, at or below a predetermined value, and is set according to the performance of the battery cell 21.

In a solid-state battery using lithium as the negative electrode, it is necessary to observe not only the upper limit surface pressure but also the lower limit surface pressure. As represented by the graph b, the lower the surface pressure, the higher the cell resistance (DCR: direct-current resistance). For example, suppose the surface pressure of the battery cell 21 lowers, and the cell resistance increases during the charging of the battery module 2. In that case, the charge current becomes low relative to the charge voltage applied to the battery cell 21, resulting in a longer charging time. In addition, if the cell resistance increases during the discharging of the battery module 2, the current supplied to a load decreases, causing a possibility that the current required to operate the load cannot be secured. Therefore, the surface pressure corresponding to an intersection point between the characteristic of surface pressure-cell resistance (DCR) (graph b) and the reference value (C) is preset as the lower limit surface pressure (P_{th_L}). That is, the lower limit surface pressure (P_{th_L}) is the lower limit value of the permissible surface pressure for the battery cell 21. The lower limit surface pressure (P_{th_L}) is a threshold value that keeps the cell resistance, which varies depending on the surface pressure, at or below a predetermined value and is a threshold value defined by external factors of the battery cell 21, such as the permissible charging time for charging the battery module 2 and the operating current of the connected load.

Next, the current control by the controller 10 during charging and discharging is described. While the following explanation mainly describes the control during the charging of the battery module 2, the discharge control of the battery module 2 is also similar to the charge control. The controller 10 determines the discharge current of the battery module 2 using a method similar to the method of determining the charge current and controls the discharging of the battery module 2.

When the controller 10 receives a command to start charging the battery module 2, it acquires the measured value of the surface pressure distribution measured by the surface pressure distribution measuring device 15. The surface pressure distribution measuring device 15 measures the measured value (actual measured value) of the surface pressure distribution of the battery module 2 at a predetermined cycle. The controller 10 acquires the measured value of the surface pressure distribution from the surface pressure distribution measuring device 15 during the charging of the battery module 2.

The controller 10 calculates an upper-limit surface pressure difference by obtaining a difference between the measured value of the surface pressure distribution and the upper limit surface pressure (P_{th_H}) of a battery cell 21. The controller 10 calculates a lower-limit surface pressure difference by obtaining a difference between the measured value of the surface pressure distribution and the lower limit surface pressure (P_{th_L}) of the battery cell 21.

In addition, when the maximum surface pressure value and the minimum surface pressure value of the surface pressure distribution are measured, the controller 10 may calculate the upper-limit surface pressure difference by obtaining a difference between the maximum surface pressure value of the surface pressure distribution and the upper limit surface pressure (P_{th_H}) of the battery cell 21 and may calculate the lower-limit surface pressure difference by obtaining a difference between the minimum surface pressure value of the surface pressure distribution and the lower limit surface pressure (P_{th_L}) of the battery cell 21.

The controller 10 then determines the charge/discharge current according to the upper-limit surface pressure difference and the lower-limit surface pressure difference. Specifically, the controller 10 determines the charge/discharge current to ensure that the upper-limit surface pressure difference and the lower-limit surface pressure difference are maintained at or below a difference threshold. As described above, the battery module 2 according to the embodiment must observe the upper limit surface pressure and the lower limit surface pressure during charging. For example, when the measured value of the surface pressure distribution of the battery cell 21 reaches the upper limit surface pressure during the charging of the battery module 2, the controller 10 lowers the charge current. When the charging is continued with the charge current lowered and the pressure difference in the surface pressure distribution is relaxed, the maximum surface pressure value becomes smaller. Therefore, the upper-limit surface pressure difference becomes greater than the difference threshold. The controller 10 raises the charge current at the timing when the upper-limit surface pressure difference exceeds the difference threshold. When the charge current increases, the charging reaction in the battery cell 21 is accelerated, the surface pressure on the main surface of the battery cell 21 increases, and the upper-limit surface pressure difference becomes equal to or less than the difference threshold. The controller 10 determines the charge current by repeatedly raising the current according to the upper-limit surface pressure difference during the charging of the battery module 2 to ensure that the upper-limit surface pressure difference is maintained at or below the difference threshold.

The controller 10 only needs to lower the charge current when the measured value of the surface pressure distribution of the battery cell 21 is less than the lower limit surface pressure during the charging of the battery module 2, and raise the charge current at the timing when the lower-limit surface pressure difference becomes greater than the difference threshold. In addition, in a case where the upper-limit surface pressure difference and the lower-limit surface pressure difference are different depending on the surface pressure distribution of the battery cell 21 during the charging of the battery module 2, the controller 10 only needs to lower the charge current when the smaller surface pressure difference of the upper-limit surface pressure difference and the lower-limit surface pressure difference reaches the difference threshold. Then, the controller 10 only needs to raise the charge/discharge current when the smaller surface pressure difference becomes greater than the difference threshold after the charge current is lowered. The difference threshold only needs to be a value equal to or greater than 0. For example, when the difference threshold is set to zero or a value of close to zero, the controller 10 determines the charge current that maintains the maximum surface pressure value of the battery cell 21 to a high state (a state close to the upper limit surface pressure P_{th_H}) and maintains the minimum surface pressure value to a low state (a state close to the lower limit surface pressure P_{th_L}) so that the surface pressure distribution of the battery cell 21 does not exceed the surface pressure limits (upper limit surface pressure: P_{th_H}, lower limit surface pressure: P_{th_L}).

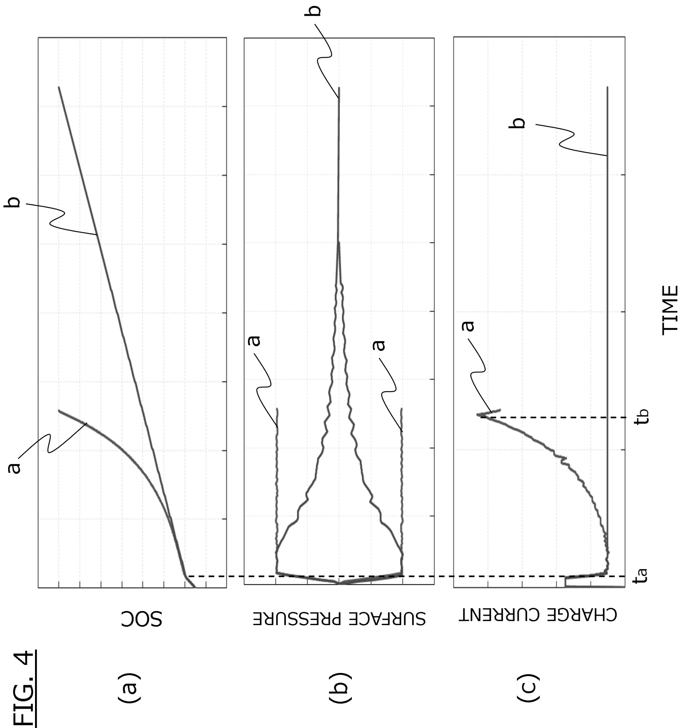

Here, with reference to FIG. 4, the relationship between the surface pressure distribution of the battery cell 21 and the charge current is described. In FIG. 4, (a) represents an SOC characteristic, (b) represents a surface pressure characteristic, and (c) represents a charge current (C rate) characteristic. The horizontal axis of each graph represents time. Graphs ***a*** represent the characteristics when the battery module 2 is charged using the charge control according to the embodiment, and graphs b represent the characteristics when the battery module 2 is charged using charge control according to a comparative example. In the charge control according to the comparative example, when the measured value of the surface pressure of the battery cell 21 reaches the upper limit surface pressure, the charge current decreases, and then, the battery module 2 is charged while maintaining the charge current after the decrease.

The battery module 2 has a structure in which a plurality of battery cells 21 are stacked. At a center part of a battery cell 21, a heat insulating effect is exerted by other battery cells 21 adjacent to one another on its upper and lower surfaces. On the other hand, at the tab parts of the battery cell 21, heat escapes more easily compared to the center part. Therefore, during the charging of the battery cell 21, a part with a high temperature and a part with a low temperature occur on the main surface of the battery cell 21. At the part with a high temperature, the charge reaction is accelerated, increasing the amount of lithium precipitation and increasing the surface pressure. As represented by the graph b in FIG. 3, as the surface pressure increases, the cell resistance decreases. Accordingly, the charging reaction is further accelerated, and the surface pressure further increases. Thus, the difference in the temperature on the main surface of the battery cell 21 causes a surface pressure difference in the surface pressure distribution (the difference between the maximum surface pressure value and the minimum surface pressure value).

When the battery module 2 is charged and the measured value of the surface pressure distribution of the battery cell 21 reaches the upper limit surface pressure, the controller 10 lowers the charge current. In the example of FIG. 4, since the measured value of the surface pressure distribution of the battery cell 21 reaches the upper limit surface pressure at a point of time tₐ, the controller 10 lowers the charge current. As in the comparative example, when the charge current is reduced and the charge control is continued, the surface pressure difference between a part with a high surface pressure and a part with a low surface pressure gradually decreases and converges to a constant surface pressure (see the graph b in FIG. 4(b)). In addition, in the comparative example, since the charge control is continued with the current lowered, the SOC of the battery module 2 takes longer to reach the target SOC. That is, as represented by the graph b in FIG. 4(a), the charging time is longer in the comparative example.

In the embodiment, when the measured value of the surface pressure distribution of the battery cell 21 reaches the upper limit surface pressure at a point of time tₐ, the controller 10 lowers the charge current once and performs charge control. When the charging of the battery module 2 is continued with the charge current lowered, the precipitated lithium becomes thicker with the progress of charging. As described above, the difference in the temperature on the main surface of the battery cell 21 (temperature distribution) causes the surface pressure difference in the surface pressure distribution. The pressure applied to the part with a high surface pressure causes the lithium to spread in a direction along the main surface while wetting. That is, the lithium moves from the part with a high surface pressure toward the part with a low pressure. Thus, the amount of lithium migration in a plane direction that relaxes the surface pressure distribution increases.

Then, when the surface pressure distribution is relaxed and at least one of the upper-limit surface pressure difference and the lower-limit surface pressure difference becomes equal to or less than the difference threshold, the controller 10 raises the charge current. That is, when the surface pressure distribution parts are relaxed and the measured value of the surface pressure distribution of the battery cell 21 becomes less than the upper limit surface pressure, the controller 10 raises the charge current. Then, the charge control is continued with the charge current raised, and when the measured value of the surface pressure distribution of the battery cell 21 reaches the upper limit surface pressure, the controller 10 lowers the charge current once to relax the surface pressure distribution, and raises the charge current again (hereinafter, such control is also referred to as high current control). As represented by the graph ***a*** in FIG. 4(c), the controller 10 performs the high current control between time tₐ and time t_{b}. During the charging of the battery module 2, the controller 10 performs the high current control when the maximum surface pressure value of the surface pressure distribution of the battery cell 21 reaches the upper limit surface pressure. In addition, the controller 10 performs the high current control when the minimum surface pressure value of the surface pressure distribution of the battery cell 21 reaches the lower limit surface pressure. As the thickness of the lithium increases by charging, the amount of lithium migration increases. Accordingly, as the charging is continued and the SOC increases, the surface pressure distribution is more easily relaxed. Therefore, the battery module 2 can be charged with a higher charge current.

As a result of the high current control by the controller 10, the surface pressure on the main surface of the battery cell 21 represents the characteristic as represented by the graph ***a*** in FIG. 4(b). The maximum surface pressure value of the surface pressure distribution of the battery cell 21 is maintained at a high value within the range that does not exceed the upper limit surface pressure, and the minimum surface pressure value of the surface pressure distribution of the battery cell 21 is maintained at a low value within the range that does not fall below the lower limit surface pressure. In addition, the charge current represents the characteristic as represented by the graph ***a*** in FIG. 4(c), and the charge current gradually increases. When the voltage of the battery module 2 reaches an upper limit voltage at a point of time t_{b}, the controller 10 gradually lowers the current while maintaining the charge voltage of the battery module 2 at the upper limit voltage (CV current control). In the embodiment, since the battery module 2 is charged using the high current control, the charging time is shorter than that of the comparative example (see the graph ***a*** in FIG. 4(a)). While FIG. 4 illustrates the characteristics during charging to describe the effect of shortening the charging time, the discharge current can also be increased by applying the same control logic as the high current control on the discharge side.

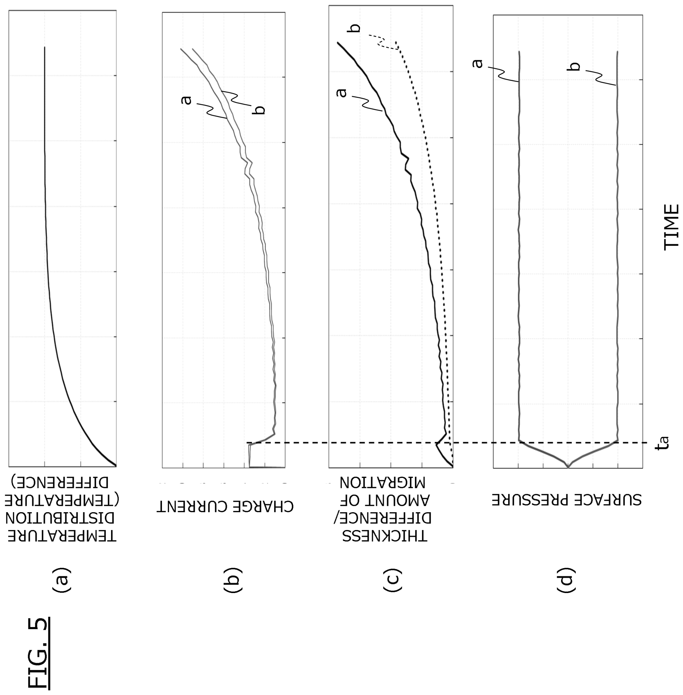

Next, with reference to FIG. 2 and FIG. 5, the temperature distribution, the charge current, the thickness difference, the amount of lithium migration, and the surface pressure distribution of the battery cell 21 are described. In the following description, a center portion of the main surface of the battery cell 21 is denoted by A₁, and an end portion of the main surface of the battery cell 21 is denoted by A₂. During the charging of the battery module 2, the temperature at the center portion A₁ of the battery cell 21 tends to be higher than the temperature at the end portion A₂. Therefore, as illustrated in FIG. 5(a), as the charging time proceeds, the temperature distribution of the battery cell 21 expands, and the temperature difference increases. Compared with the end portion (A₂), the temperature is higher, and the charge current is greater at the center portion (A₁) of the main surface of the battery cell 21. As illustrated in FIG. 5(b), the charge current at the center portion (A₁) transitions according to the characteristic of the graph a, and the charge current at the end portion (A₂) transitions according to the characteristic of the graph b. The charge current is higher at the center portion (A₁), and the charging reaction is accelerated. Therefore, the thickness due to lithium precipitation is thicker than that of the end portion (A₂). In addition, the difference in thickness due to lithium precipitation between the center portion (A₁) and the end portion (A₂) increases as the charging time proceeds (see the graph ***a*** in FIG. 5(c)). Further, the creep amount increases in a thicker part (center portion (A₁)) of the battery cell 21, and lithium deformation causes the lithium to move from the center portion (A₁) toward the end portion (A₂). As represented by the graph b in FIG. 5(c), the amount of lithium migration increases as the charging time proceeds. Then, the surface pressure at the center portion (A₁) transitions according to the characteristic represented by the graph ***a*** in FIG. 5(d), and the surface pressure at the end portion (A₂) transitions according to the characteristic represented by the graph b in FIG. 5(d).

Thus, during the charging of the battery module 2, a temperature distribution occurs on the surface of the battery cell 21, forming a part with a high temperature and a part with a low temperature. The temperature distribution forms a surface pressure distribution on the main surface of the battery cell 21, forming a thicker part and a thinner part. Since more pressure is applied in the thicker part, the lithium wets and spreads in the direction along the main surface of the battery cell 21. As the charging of the battery cell 21 progresses, the amount of lithium migration increases. Therefore, the higher the SOC, the greater the amount of lithium migration, and the more relaxed the surface pressure distribution. Furthermore, in the embodiment, when the surface pressure distribution is relaxed, the charge current is increased by the amount of relaxation. This allows shortening the charging time during the charging of the battery module 2 while observing the upper and lower limit surface pressures (P_{th_H}, P_{th_L}).

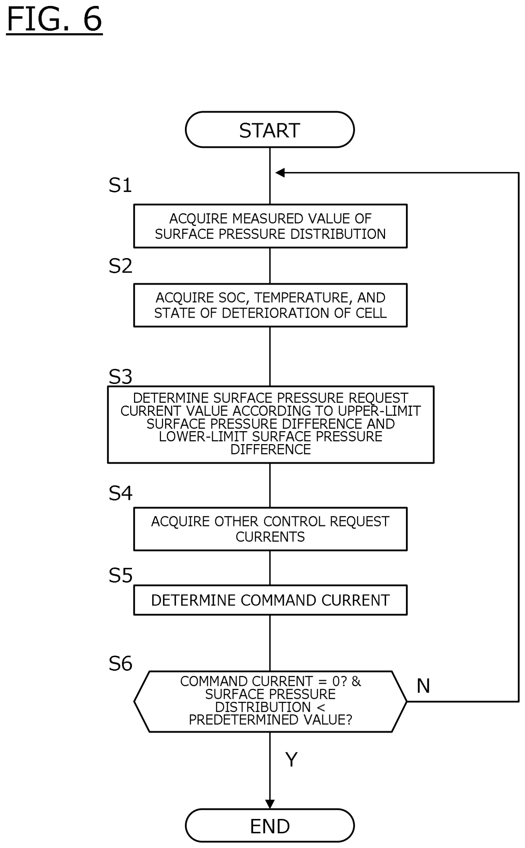

The following describes a battery control method of the battery module 2. FIG. 6 is a flowchart illustrating the procedure of the battery control method according to the embodiment. The battery control method according to the embodiment is performed repeatedly at every predetermined cycle during the charging of the battery module 2.

First, in Step S1, the controller 10 acquires the measured value of the surface pressure distribution on the main surface of the battery cell 21 from the surface pressure distribution measuring device 15. In Step S2, the controller 10 acquires the SOC of the battery cell 21, the temperature of the battery cell 21, and the state of deterioration (the degree of deterioration) of the battery cell 21. It is only necessary to calculate the SOC of the battery cell 21 by, for example, current accumulation of the battery cell 21. It is only necessary to acquire the temperature of the battery cell 21 from the temperature sensor 13. The controller 10 may calculate the temperature distribution on the main surface of the battery cell 21 from the detection temperature of the temperature sensor 13, using a calculation model of the temperature distribution of the battery cell 21. It is only necessary to calculate the state of deterioration of the battery cell 21, for example, from the ratio of the current battery capacity to the initial battery capacity of the battery cell 21. The above calculation methods of the SOC and the state of deterioration of the battery cell 21 are only examples, and other methods may be used.

In Step S3, the controller 10 calculates the upper-limit surface pressure difference by obtaining a difference ("upper limit surface pressure (P_{th_H})" - "measured value of surface pressure distribution") between the measured value of the surface pressure distribution and the upper limit surface pressure (P_{th_H}) of a battery cell 21. The controller 10 calculates the lower-limit surface pressure difference by obtaining a difference ("measured value of surface pressure distribution" - "lower limit surface pressure (P_{th_L})") between the measured value of the surface pressure distribution and the lower limit surface pressure (P_{th_L}) of the battery cell 21. When the maximum surface pressure value and the minimum surface pressure value of the surface pressure distribution are measured as the respective measured values, the controller 10 may calculate the upper-limit surface pressure difference from the difference ("upper limit surface pressure (P_{th_H})" - "maximum surface pressure value") between the maximum surface pressure value and the upper limit surface pressure (P_{th_H}) and may calculate the lower-limit surface pressure difference from the difference ("minimum surface pressure value" - "lower limit surface pressure (P_{th_L})") between the minimum surface pressure value and the lower limit surface pressure (P_{th_L}). The controller 10 determines a surface pressure request current value (I_{E}) according to the upper-limit surface pressure difference and the lower-limit surface pressure difference. Specifically, when the difference ("upper limit surface pressure (P_{th_H})" - "measured value of surface pressure distribution") and the difference ("measured value of surface pressure distribution" - "lower limit surface pressure (P_{th_L})") are greater than 0, the controller 10 raises the surface pressure request current value (I_{E}). On the other hand, when the difference ("upper limit surface pressure (P_{th_H})" - "measured value of surface pressure distribution") is less than 0, or when the difference ("measured value of surface pressure distribution" - "lower limit surface pressure (P_{th_L})") is less than 0, the surface pressure request current value (I_{E}) is lowered. The surface pressure request current value (I_{E}) is the maximum value of the current required by the surface pressure and is the current value determined by the high current control.

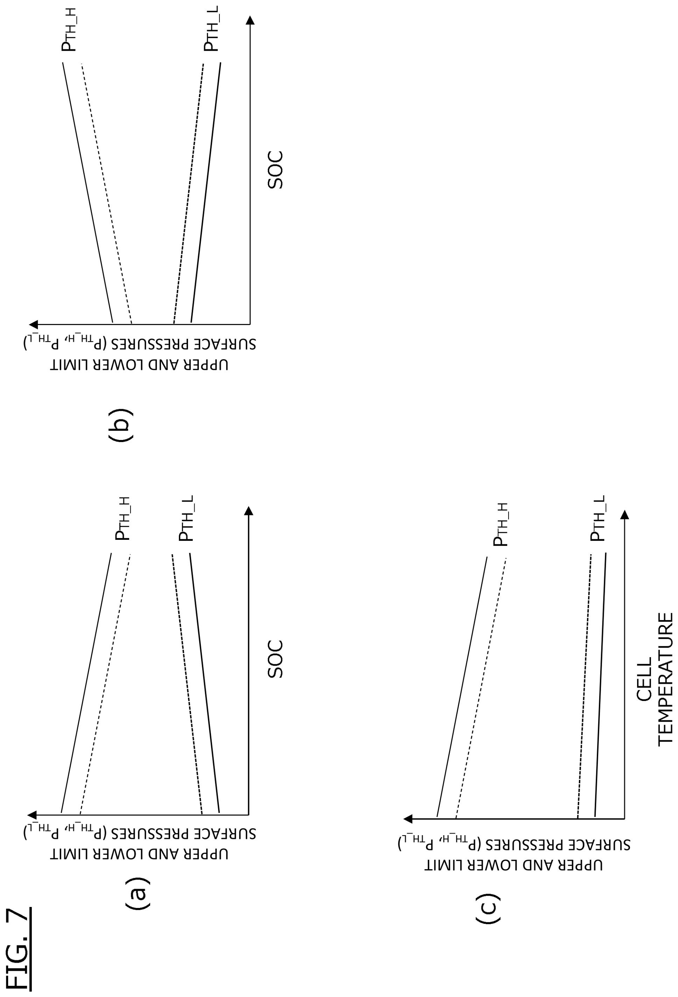

The controller 10 may correct the upper limit surface pressure (P_{th_H}) and the lower limit surface pressure (P_{th_L}) according to at least one element among the SOC, the temperature, and the state of deterioration of the battery cell 21. FIGS. 7(a) and 7(b) are graphs representing the characteristics of the upper and lower limit surface pressures (P_{th_H}, P_{th_L}) relative to the SOC of the battery cell 21. FIG. 7(c) is a graph representing the characteristics of the upper and lower limit surface pressures (P_{th_H}, P_{th_L}) relative to the temperature of the battery cell 21. In FIGS. 7(a) to 7(c), solid lines indicate the characteristics before deterioration, and dotted lines indicate the characteristics after deterioration. The characteristics of the upper and lower limit surface pressures (P_{th_H}, P_{th_L}) according to the SOC of the battery cell 21 and the characteristics of the upper and lower limit surface pressures (P_{th_H}, P_{th_L}) according to the temperature change depending on a battery material and the like. The controller 10 has in advance correction indexes, such as a calculation model and a table, to correct the upper and lower limit surface pressures (P_{th_H}, P_{th_L}) relative to the SOC, the temperature, and the state of deterioration, according to the characteristics of the battery cell 21. For example, suppose the characteristics of the battery cell 21 are battery characteristics that raise the possibility of a short circuit by an increase in the amount of lithium migration in the direction along the main surface of the battery cell 21 when the SOC is high or when the temperature of the battery cell 21 is high. In that case, the controller 10 corrects the upper limit surface pressure (P_{th_H}) according to the SOC or the temperature so that the higher the SOC or the higher the temperature, the smaller the upper limit surface pressure (P_{th_H}) (see FIGS. 7(a) and 7(c)). For example, suppose the characteristics of the battery cell 21 are battery characteristics that cause the cell resistance to increase by a contraction of the positive-electrode active material when the SOC is high. In that case, the controller 10 corrects the lower limit surface pressure (P_{th_L}) according to the SOC so that the higher the SOC, the greater the lower limit surface pressure (P_{th_L}) (see FIG. 7(a)). In addition, when the degree of deterioration of the battery cell 21 is high, the controller 10 corrects the upper and lower limit surface pressures (P_{th_H}, P_{th_L}) so that the upper limit surface pressure (P_{th_H}) is smaller, and the lower limit surface pressure (P_{th_L}) is greater, compared with a case where the degree of deterioration is low.

It is only necessary to appropriately change the correction direction according to the battery material (positive and negative-electrode active material and the like) used in the battery cell 21 and the battery structure of the battery cells 21 and the battery module 2. For example, as illustrated in FIG. 7(b), the controller 10 may correct the upper and lower limit surface pressures (P_{th_H}, P_{th_L}) so that the higher the SOC, the greater the upper limit surface pressure (P_{th_H}), and the smaller the lower limit surface pressure (P_{th_L}). In addition, the controller 10 may correct the upper and lower limit surface pressures (P_{th_H}, P_{th_L}) by combining the elements of the SOC, the temperature, and the state of deterioration of the battery cell 21, or may correct the upper and lower limit surface pressures (P_{th_H}, P_{th_L}) using all the elements.

In Step S4, the controller 10 acquires other control request currents determined by factors other than the surface pressure of the battery cell 21. The other control request currents include a system request current (I_{F}) determined by a system request and protection request currents (I_{G}, I_{H}) determined by a protection request of the battery cell 21. The system request current is the maximum current in a system that charges or discharges the battery module 2. The request current of a charging system corresponds to the maximum current that can be output from the charging device. The request current of a discharging system corresponds to the maximum current value determined from the operating state of a load, such as a motor, connected to the battery module 2. The protection request current (I_{G}) is a maximum current (I_{G}) determined from an upper limit temperature of the battery cell 21 so that the temperature of the battery cell 21 does not become equal to or greater than the upper limit temperature. The protection request current (I_{H}) is a maximum current (I_{H}) determined from the upper limit voltage of the battery cell so that the battery cell 21 is not overcharged or overdischarged. The controller 10 switches from the high current control to the CV current control when the charge voltage of the battery module 2 reaches the upper limit voltage. However, it is only necessary to adjust the current value in the CV current control by the maximum current (I_{H}).

In Step S5, the controller 10 sets the lowest current among the surface pressure request current value (I_{E}), the system request current (I_{F}), and the protection request currents (I_{G}, I_{H}) as an actual current for charging and discharging the battery module 2 to determine it as a command current for setting the charge current for the battery module 2 to the actual current. That is, the controller 10 determines the command current by selecting the lowest of the surface pressure request current value (I_{E}), the system request current (I_{F}), and the protection request currents (I_{G}, I_{H}).

In Step S6, when the command current is zero and the measured value of the surface pressure distribution is less than a predetermined value of the surface pressure distribution, the controller 10 terminates the charge control. On the other hand, when the command current is not zero, or when the measured value of the surface pressure distribution is equal to or greater than the predetermined value, the controller 10 sends a control command of the command current (an actual current command value) to the charging device and performs the charge control from Step S1. It is only necessary to set the predetermined value of the surface pressure distribution to determine the end of the charge control according to variations in the measured value of the surface pressure distribution. In the control flow of the battery control method described above, even in a case where the command current is zero, when the measured value of the surface pressure distribution is equal to or greater than the predetermined value of the surface pressure distribution, the charge control is continued to relax the variation in the surface pressure and prepare for the next charge and discharge event. The condition for the surface pressure distribution may be omitted in the control flow of Step S6.

As described above, the battery control system and the battery control method according to the embodiment measure the surface pressure distribution from the actual measured value of the surface pressure distribution on the main surface of the battery cell 21 and determine the charge/discharge current, which is at least one of the charge current and the discharge current of the battery module 2 (solid-state battery) according to the upper-limit surface pressure difference and the lower-limit surface pressure difference. The upper-limit surface pressure difference is the difference between the measured value of the measured surface pressure distribution and the upper limit surface pressure of the battery cell 21. The lower-limit surface pressure difference is the difference between the measured value of the measured surface pressure distribution and the lower limit surface pressure of the battery cell 21. Accordingly, the charge/discharge current of the battery module 2 can be controlled to ensure that the surface pressure of the battery cell 21 does not fall below the lower limit surface pressure (P_{th_L}). In addition, during the charging of the battery module 2, the charging time can be shortened while observing the upper and lower limit surface pressures (P_{th_H}, P_{th_L}).

Moreover, the battery control system according to the embodiment corrects the upper limit surface pressure (P_{th_H}) and the lower limit surface pressure (P_{th_L}) according to at least one element among the SOC of the battery cell 21, the temperature of the battery cell 21, and the degree of deterioration of the battery cell 21. This allows shortening the charging time while observing the upper and lower limit surface pressures (P_{th_H}, P_{th_L}), even when the state of the battery cell 21 changes.

Further, the battery control system according to the embodiment sets the lowest current among the charge/discharge current determined according to the upper-limit surface pressure difference and the lower-limit surface pressure difference (corresponding to the surface pressure request current value I_{E}), the system request current determined by the system request, and the protection request currents determined by the protection request of the battery cell 21 as an actual current for charging and discharging the battery module 2. This allows shortening the charging time within a range that satisfies the current condition determined by other requests, other than the surface pressure, and does not exceed the upper and lower limit surface pressures (P_{th_H}, P_{th_L}).

In addition, the battery control system according to the embodiment lowers the charge/discharge current when the smaller surface pressure difference of the upper-limit surface pressure difference and the lower-limit surface pressure difference reaches a difference threshold. After the charge/discharge current is lowered, the battery control system raises the charge/discharge current when the surface pressure difference becomes greater than the difference threshold. This allows shortening the charging time during the charging of the battery module 2 while observing the upper and lower limit surface pressures (P_{th_H}, P_{th_L}).

Further, the battery control system according to the embodiment determines the charge/discharge current to ensure that the upper-limit surface pressure difference is maintained at or below the difference threshold or to ensure that the lower-limit surface pressure difference is maintained at or below the difference threshold during the charging and discharging of the battery module 2. The upper-limit surface pressure difference is the difference between the maximum surface pressure value of the surface pressure distribution and the upper limit surface pressure. The lower-limit surface pressure difference is the difference between the minimum surface pressure value of the surface pressure distribution and the lower limit surface pressure. This allows shortening the charging time during the charging of the battery module 2 while observing the upper and lower limit surface pressures (P_{th_H}, P_{th_L}).

In the embodiment, without providing the surface pressure distribution measuring device 15, the controller 10 may measure the surface pressure distribution from an estimated value of the surface pressure distribution on the main surface of the battery cell 21. That is, without using the actual measured value by the surface pressure distribution measuring device 15 as the measured value of the surface pressure distribution, the controller 10 may estimate the surface pressure distribution by arithmetic processing, such as a calculation model, and use the estimated value resulting from the arithmetic processing as the measured value of the surface pressure distribution. The following describes a method of estimating the surface pressure distribution.

The controller 10 calculates the estimated value of the surface pressure distribution from the measured value of a current distribution on the main surface of the battery cell 21, the measured value of the temperature distribution on the main surface of the battery cell 21, and the SOC of the battery cell 21. It is only necessary to calculate the current distribution from a resistance distribution in the battery cell 21. It is only necessary to measure the resistance distribution using a resistance distribution sensing device, such as a shunt resistance. The resistance distribution sensing device is disposed in the outermost layer of a plurality of stacked battery cells 21. The controller 10 acquires a detected value of an input voltage or an output voltage of the battery module 2 from the voltage sensor 11 during charging and discharging and calculates the current distribution on the main surface of the battery cell 21 from the voltage of the battery module 2 and the resistance distribution measured by the resistance distribution sensing device. The current distribution corresponds to the distribution of the amount of lithium precipitation.

The controller 10 acquires the detection temperature of the temperature sensor 13 and calculates the temperature distribution of the battery cell 21 from the calculation model that models the temperature distribution of the battery cell 21 and the detection temperature. The controller 10 may measure the temperature distribution using a temperature distribution measuring device that measures the temperature distribution, instead of the temperature sensor 13. The controller 10 calculates the SOC of the battery cell 21 from the detection voltage of the voltage sensor 11 or an accumulated value of the charge/discharge current. The controller 10 can estimate the surface pressure distribution by calculating the amount of lithium migration in the direction along the main surface of the battery cell 21 from the current distribution, the temperature distribution, and the SOC. As illustrated in FIG. 5, the amount of lithium migration is correlated with the temperature distribution and the current distribution on the main surface of the battery cell 21, and the higher the SOC, the greater the amount of lithium migration. Furthermore, the surface pressure distribution on the main surface of the battery cell 21 can be obtained from the amount of lithium migration. Therefore, for example, calculation formulas to calculate the amount of lithium migration (or the surface pressure distribution) can be modeled for the temperature distribution, the current distribution, and the SOC. The controller 10 can estimate the surface pressure distribution from the modeled formulas. Accordingly, the controller 10 can measure the surface pressure distribution from the estimated value of the surface pressure distribution. This eliminates the need for the surface pressure distribution measuring device 15, and cost reduction can be achieved.

The controller 10 may estimate the surface pressure distribution by the following estimation method. The controller 10 may calculate the current distribution on the main surface of the battery cell 21 from the measured value of the temperature distribution on the main surface of the battery cell 21 and a battery resistance characteristic of the battery cell 21 and calculate the estimated value of the surface pressure distribution from a calculated value of the calculated current distribution, the measured value of the temperature distribution, and the SOC of the battery cell 21. The battery resistance characteristic of the battery cell 21 is represented by a map showing the correlation between the battery temperature and resistance (DCR map), and the like. The controller 10 has a DCR map, and it is only necessary to calculate the characteristic of the resistance distribution relative to the measured value of the temperature distribution by referring to the DCR map. The controller 10 then calculates the current distribution on the main surface of the battery cell 21 from the measured value of the temperature distribution of the battery cell 21 and the battery resistance characteristic of the battery cell 21. Furthermore, the controller 10 can estimate the surface pressure distribution by calculating the amount of lithium migration in the direction along the main surface of the battery cell 21 from the current distribution, the temperature distribution, and the SOC. The method of estimating the surface pressure distribution is the same as above. Accordingly, the controller 10 can measure the surface pressure distribution from the estimated value of the surface pressure distribution. This eliminates the need for a resistance distribution measuring device, and cost reduction can be achieved. The controller 10 in the embodiment corresponds to an exemplary "measurement unit" in the present invention.

The controller 10 may estimate the surface pressure distribution by the following estimation method. The controller 10 may calculate a heat generation amount and/or a heat dissipation amount of the battery cell 21 from the battery resistance characteristic of the battery cell 21, various battery characteristics determined by a shape and/or a material of the battery cell 21, an internal temperature of the battery cell 21, and an environmental temperature, and calculate the estimated value of the surface pressure distribution from the calculated heat generation amount and/or the heat dissipation amount and the SOC of the battery cell 21. The various battery characteristics are the characteristics that show the thermal conductivity of the battery cell 21 dependent on the active material and tab material contained in the battery cell 21 and the shape of the battery cell 21. The internal temperature of the battery cell 21 corresponds to the detection temperature of the temperature sensor 13. The environmental temperature is the temperature surrounding the battery module 2, and it is only necessary to detect the environmental temperature with a sensor. Calculation formulas to calculate the heat generation amount and/or the heat dissipation amount are modeled for the battery resistance characteristic, the various battery characteristics, the internal temperature of the battery cell 21, and the environmental temperature. The controller 10 calculates the heat generation amount and/or the heat dissipation amount from the modeled formulas. The controller 10 then calculates the temperature distribution on the main surface of the battery cell 21 from the calculated heat generation amount and/or the heat dissipation amount and calculates the estimated value of the surface pressure distribution from the current distribution and the SOC. Accordingly, the controller 10 can measure the surface pressure distribution from the estimated value of the surface pressure distribution. This eliminates the need for a temperature distribution measuring device, and cost reduction can be achieved.

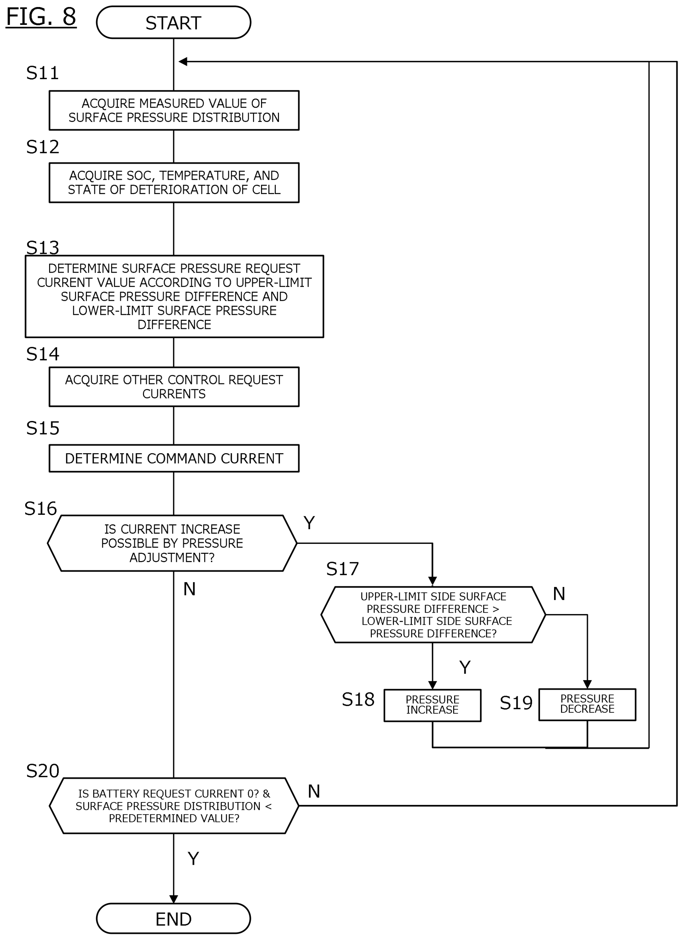

As a modification of the embodiment, the battery control system 1 may perform the high current control by increasing the surface pressure difference by adjusting the pressure applied to the battery cell 21 based on the magnitude relationship between the upper-limit surface pressure difference and the lower-limit surface pressure difference during the charging and discharging of the battery module 2. FIG. 8 is a flowchart illustrating the procedure of a battery control method according to the modification of the embodiment. The battery control method according to the modification is performed repeatedly at every predetermined cycle during the charging of the battery module 2. While the following explanation describes the control during the charging of the battery module 2, the control flow during charging can also be applied appropriately to the discharge control of the battery module 2.

Since the control flow from Steps S11 to S15 is the same as the control flow from Steps S1 to S5 described above, the description is omitted. In Step S16, the controller 10 calculates each of the upper-limit surface pressure difference and the lower-limit surface pressure difference and determines whether or not a current increase by pressure adjustment is possible according to the magnitude of a difference between the upper-limit surface pressure difference and the lower-limit surface pressure difference. When the upper-limit surface pressure difference and the lower-limit surface pressure difference are different, the charge current is determined according to the smaller of the differences. In the modification, when there is a difference between the upper-limit surface pressure difference and the lower-limit surface pressure difference, the pressure is adjusted to reduce the difference between the upper-limit surface pressure difference and the lower-limit surface pressure difference. On the other hand, when the difference between the upper-limit surface pressure difference and the lower-limit surface pressure difference is small, that is, when the upper-limit surface pressure difference and the lower-limit surface pressure difference have almost the same magnitude, the width of the current increase by pressure adjustment is small. Therefore, for example, when the difference between the upper-limit surface pressure difference and the lower-limit surface pressure difference is equal to or greater than a predetermined value, the controller 10 determines that the current increase by pressure adjustment is possible. When the difference between the upper-limit surface pressure difference and the lower-limit surface pressure difference is less than the predetermined value, the controller 10 determines that the current increase by pressure adjustment is not possible.

When the controller 10 determines that the current increase by pressure adjustment is possible, in Step S17, the controller 10 determines whether or not the upper-limit surface pressure difference is greater than the lower-limit surface pressure difference. When the upper-limit surface pressure difference is greater than the lower-limit surface pressure difference, in Step S18, the controller 10 outputs a command to the pressure application mechanism 16 to increase the pressure applied to the battery cell 21. On the other hand, when the upper-limit surface pressure difference is smaller than the lower-limit surface pressure difference, in Step S19, the controller 10 outputs a command to the pressure application mechanism 16 to decrease the pressure applied to the battery cell 21. After the pressure adjustment, the controller 10 performs the charge control from Step S11. Then, the controller 10 can further increase the charge/discharge current of the battery cell 21 by performing the control flow of Step S13 after the pressure adjustment.

In the determination process of Step S16, when the controller 10 determines that the current increase by pressure adjustment is not possible, the controller 10 performs the control flow of Step S20. Since the control flow of Step S20 is the same as the control flow of Step S6 described above, the description is omitted.

That is, the battery control system 1 according to the modification of the embodiment raises the pressure applied to the battery cell 21 when the upper-limit surface pressure difference is greater than the lower-limit surface pressure difference, and lowers the pressure applied to the battery cell 21 when the upper-limit surface pressure difference is smaller than the lower-limit surface pressure difference. This allows relaxing the restriction on charging and discharging required by the upper and lower limit surface pressures and shortening the charging time.

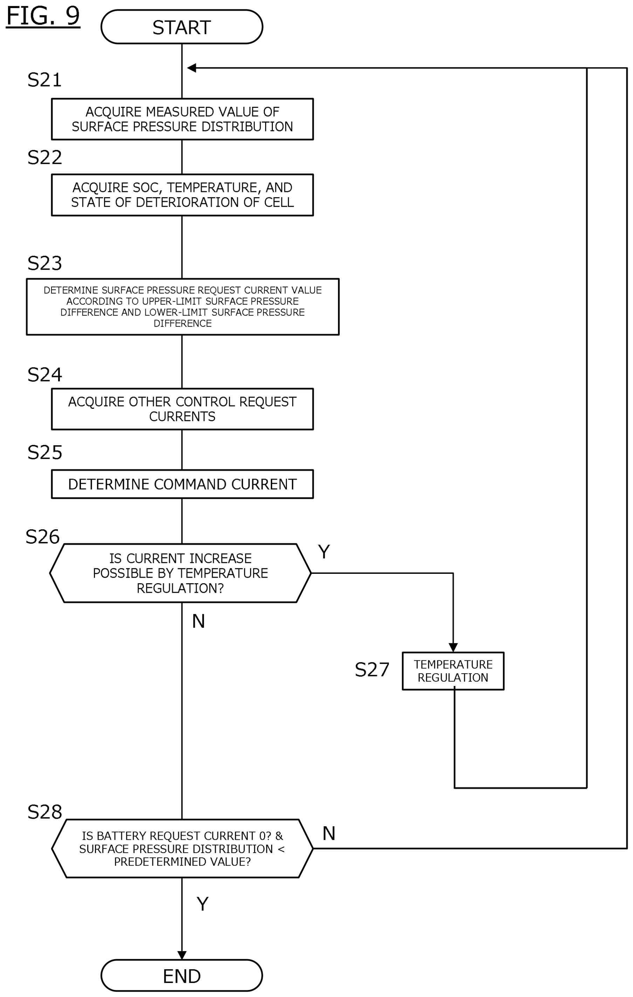

As a modification of the embodiment, the battery control system 1 may perform the high current control by regulating the temperature of the battery cell 21 based on the temperature distribution on the main surface of the battery cell 21 during the charging and discharging of the battery module 2. FIG. 9 is a flowchart illustrating the procedure of a battery control method according to the modification of the embodiment. The battery control method according to the modification is performed repeatedly at every predetermined cycle during the charging of the battery module 2. In addition, the battery control system 1 includes a temperature regulator to cool the battery cell 21. The temperature regulator can individually cool the inside of the battery cell 21 and the tabs of the battery cell 21. For example, when the internal temperature of the battery cell 21 is high, it is only necessary to increase the amount of cooling inside the battery cell 21 (especially at the center portion) and decrease the amount of cooling in the tabs of the battery cell 21. On the other hand, when the temperature near the tabs of the battery cell 21 is high, it is only necessary to decrease the amount of cooling inside the battery cell 21 (especially at the center portion) and increase the amount of cooling in the tabs of the battery cell 21. The temperature regulator corresponds to a "temperature regulation unit" that regulates the temperature of the battery cell 21.

FIG. 9 is a flowchart illustrating the procedure of the battery control method according to the modification of the embodiment. The battery control method according to the modification is performed repeatedly at every predetermined cycle during the charging of the battery module 2. While the following explanation describes the control during the charging of the battery module 2, the control flow during charging can also be applied appropriately to the discharge control of the battery module 2.

Since the control flow from Steps S21 to S25 is the same as the control flow from Steps S1 to S5 described above, the description is omitted. In Step S26, the controller 10 determines whether or not a current increase by temperature regulation is possible according to the magnitude relationship between an upper-limit temperature protection current determined by the upper limit temperature of the battery cell 21 and the charge/discharge current determined according to the upper-limit surface pressure difference and the lower-limit surface pressure difference. The upper-limit temperature protection current corresponds to a maximum current (protection request current: I_{G}) determined from the upper limit temperature of the battery cell 21. The charge/discharge current determined according to the upper-limit surface pressure difference and the lower-limit surface pressure difference corresponds to the surface pressure request current value (I_{E}). When the upper-limit temperature protection current determined by the upper limit temperature of the battery cell 21 is higher than the charge/discharge current determined according to the upper-limit surface pressure difference and the lower-limit surface pressure difference, the controller 10 determines that the current increase by temperature regulation is possible. When the upper-limit temperature protection current determined by the upper limit temperature of the battery cell 21 is equal to or less than the charge/discharge current determined according to the upper-limit surface pressure difference and the lower-limit surface pressure difference, the controller 10 determines that the current increase by temperature regulation is not possible.

When the controller 10 determines that the current increase by pressure regulation is possible, in Step S27, the controller 10 outputs a command to the temperature regulator to regulate the temperature of the battery cell 21. Specifically, when the temperature at the center portion of the battery cell 21 is the highest, the controller 10 outputs a control command to the temperature regulator so that the amount of cooling inside the battery cell 21 increases. When the temperature near the tabs of the battery cell 21 is the highest, the controller 10 outputs a control command to the temperature regulator so that the amount of cooling near the tabs of the battery cell 21 increases. After the temperature regulation, the controller 10 performs the charge control from Step S21. By regulating the temperature of the battery cell 21, the upper-limit temperature protection current determined by the upper limit temperature of the battery cell 21 increases.

In the determination process of Step S26, when the controller 10 determines that the current increase by temperature regulation is not possible, the controller 10 performs the control flow of Step S28. Since the control flow of Step S28 is the same as the control flow of Step S6 described above, the description is omitted.

That is, the battery control system 1 according to the modification of the embodiment controls the temperature regulator so that the temperature difference of the temperature distribution on the main surface of the battery cell 21 decreases, when the upper-limit temperature protection current determined by the upper limit temperature of the battery cell 21 is higher than the charge/discharge current determined according to the upper-limit surface pressure difference and the lower-limit surface pressure difference. This allows shortening the charging time.

### Description of Reference Numerals

- 1: Battery control system
- 10: Controller
- 11: Voltage sensor
- 12: Current sensor
- 13: Temperature sensor
- 14: DC-DC converter
- 15: Surface pressure distribution measuring device
- 16: Pressure application mechanism
- 2: Battery module
- 21: Battery cell

## Claims

1. A battery control system that controls a solid-state battery including a battery cell having a solid electrolyte and a negative electrode containing lithium, the battery control system comprising:
a measurement unit that measures a surface pressure distribution from an actual measured value or an estimated value of a surface pressure distribution on a main surface of the battery cell; and
a control unit that controls a charge/discharge current of the solid-state battery, the charge/discharge current being at least one of a charge current and a discharge current, wherein
the control unit determines the charge/discharge current according to an upper-limit surface pressure difference and a lower-limit surface pressure difference, the upper-limit surface pressure difference being a difference between a measured value of the surface pressure distribution measured by the measurement unit and an upper limit surface pressure of the battery cell, the lower-limit surface pressure difference being a difference between the measured value of the surface pressure distribution measured by the measurement unit and a lower limit surface pressure of the battery cell.

2. The battery control system according to claim 1, wherein
the measurement unit calculates the estimated value from a measured value of a current distribution on the main surface of the battery cell, a measured value of a temperature distribution on the main surface of the battery cell, and an SOC of the battery cell.

3. The battery control system according to claim 1 or 2, wherein
the measurement unit:
calculates a current distribution on the main surface of the battery cell from a measured value of a temperature distribution on the main surface of the battery cell and a battery resistance characteristic of the battery cell; and
calculates the estimated value from a calculated value of the calculated current distribution, the measured value of the temperature distribution, and an SOC of the battery cell.

4. The battery control system according to any one of claims 1 to 3, wherein
the measurement unit:
calculates a heat generation amount and/or a heat dissipation amount of the battery cell from a battery resistance characteristic of the battery cell, various battery characteristics determined by a shape and/or a material of the battery cell, an internal temperature of the battery cell, and an environmental temperature; and
calculates the estimated value from the calculated heat generation amount and/or the heat dissipation amount and an SOC of the battery cell.

5. The battery control system according to any one of claims 1 to 4, wherein
the control unit corrects the upper limit surface pressure and the lower limit surface pressure according to at least one element among an SOC of the battery cell, a temperature of the battery cell, and a degree of deterioration of the battery cell.

6. The battery control system according to any one of claims 1 to 5, wherein
the control unit sets a lowest current among the charge/discharge current determined according to the upper-limit surface pressure difference and the lower-limit surface pressure difference, a system request current determined by a system request, and a protection request current determined by a protection request of the battery cell as an actual current for charging and discharging the solid-state battery.

7. The battery control system according to any one of claims 1 to 6, comprising
a pressure application unit that applies pressure to the solid-state battery, wherein
the measurement unit measures each of a maximum surface pressure value and a minimum surface pressure value of the surface pressure distribution, and
the control unit:
raises pressure applied to the battery cell when the upper-limit surface pressure difference is greater than the lower-limit surface pressure difference, the upper-limit surface pressure difference being a difference between the maximum surface pressure value of the surface pressure distribution and the upper limit surface pressure, the lower-limit surface pressure difference being a difference between the minimum surface pressure value of the surface pressure distribution and the lower limit surface pressure; and
lowers pressure applied to the battery cell when the upper-limit surface pressure difference is smaller than the lower-limit surface pressure difference.

8. The battery control system according to any one of claims 1 to 5, comprising
a temperature regulation unit that regulates a temperature of the battery cell, wherein
the control unit controls the temperature regulation unit to cause a temperature difference of a temperature distribution on the main surface of the battery cell to decrease when an upper-limit temperature protection current determined by an upper limit temperature of the battery cell is higher than the charge/discharge current determined according to the upper-limit surface pressure difference and the lower-limit surface pressure difference.

9. The battery control system according to any one of claims 1 to 8, wherein
the control unit:
lowers the charge/discharge current when the smaller surface pressure difference of the upper-limit surface pressure difference and the lower-limit surface pressure difference reaches a difference threshold; and
raises the charge/discharge current when the surface pressure difference becomes greater than the difference threshold after the charge/discharge current is lowered.

10. The battery control system according to any one of claims 1 to 9, wherein
the control unit determines the charge/discharge current to ensure that the upper-limit surface pressure difference is maintained at or below a difference threshold or to ensure that the lower-limit surface pressure difference is maintained at or below the difference threshold, the upper-limit surface pressure difference being a difference between a maximum surface pressure value of the surface pressure distribution and the upper limit surface pressure, the lower-limit surface pressure difference being a difference between a minimum surface pressure value of the surface pressure distribution and the lower limit surface pressure.

11. A battery control method for controlling a solid-state battery including a battery cell having a solid electrolyte and a negative electrode containing lithium, the battery control method comprising:
measuring a surface pressure distribution from an actual measured value or an estimated value of a surface pressure distribution on a main surface of the battery cell; and
according to an upper-limit surface pressure difference and a lower-limit surface pressure difference, the upper-limit surface pressure difference being a difference between a measured value of the measured surface pressure distribution and an upper limit surface pressure of the battery cell, the lower-limit surface pressure difference being a difference between a measured value of the measured surface pressure distribution and a lower limit surface pressure of the battery cell, determining a charge/discharge current that is any one of a charge current and/or a discharge current of the solid-state battery.
